(19) Europäisches Patentamt
European Patent Office
Office européen des brevets

(11) **EP 4 165 987 B1**

(12) **EUROPEAN PATENT SPECIFICATION**

(45) Date of publication and mention
of the grant of the patent:
**07.08.2024 Bulletin 2024/32**

(51) International Patent Classification (IPC):
***A01M 7/00*** *(2006.01)*      ***A01M 21/04*** *(2006.01)*
*A01M 21/02* *(2006.01)*      *A01B 79/00* *(2006.01)*

(21) Application number: **21203083.7**

(22) Date of filing: **18.10.2021**

(52) Cooperative Patent Classification (CPC):
**A01M 7/0089; A01M 21/043;** A01B 79/005;
A01M 21/02

(54) **PLANT TREATMENT SYSTEM WITH PLANT RECOGNITION**

PFLANZENBEHANDLUNGSSYSTEM MIT PFLANZENERKENNUNG

SYSTÈME DE TRAITEMENT DE PLANTES AVEC RECONNAISSANCE DE PLANTES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.04.2023 Bulletin 2023/16**

(73) Proprietor: **Bilberry SAS
94250 Gentilly (FR)**

(72) Inventors:
 • **SERRAT, Hugo
 94250 Gentilly (FR)**
 • **LUU, Duc-Anh
 94250 Gentilly (FR)**
 • **STEUNOU, Loïc
 94250 Gentilly (FR)**

(74) Representative: **AGCO Intellectual Property
Department
AGCO Limited
Abbey Park Stoneleigh
Kenilworth CV8 2TQ (GB)**

(56) References cited:
**WO-A1-2018/142371      WO-A1-2021/043904
WO-A1-2021/144785**

 • **HUGO TOUVRON ET AL: "Training data-efficient
image transformers & distillation through
attention", ARXIV.ORG, CORNELL UNIVERSITY
LIBRARY, 201 OLIN LIBRARY CORNELL
UNIVERSITY ITHACA, NY 14853, 23 December
2020 (2020-12-23), XP081845516**
 • **STRUDEL ROBIN ET AL: "Segmenter:
Transformer for Semantic Segmentation", 2021
IEEE/CVF INTERNATIONAL CONFERENCE ON
COMPUTER VISION (ICCV), IEEE, 10 October
2021 (2021-10-10), pages 7242 - 7252,
XP034092310, DOI:
10.1109/ICCV48922.2021.00717**
 • **ALEXEY DOSOVITSKIY ET AL: "An Image is
Worth 16x16 Words: Transformers for Image
Recognition at Scale", ARXIV.ORG, CORNELL
UNIVERSITY LIBRARY, 201 OLIN LIBRARY
CORNELL UNIVERSITY ITHACA, NY 14853, 22
October 2020 (2020-10-22), XP081793537**

**Description**

FIELD OF THE INVENTION

The present invention relates to plant recognition using computer vision, and more generally to plant control or destruction usable in many areas such as farming and infrastructure maintenance in cooperation with devices such as sprayers, mechanical plant removers, plant burners, etc.

BACKGROUND OF THE INVENTION

Documents WO2018142371A1 and WO2018141995A1 in the name of the instant applicant disclose weed recognition systems and methods along the following principles:

- at least one camera is mounted on a vehicle (an agricultural boom sprayer or a sprayer railway vehicle) to acquire an image of a portion of an area in front of the vehicle, said image comprising a matrix of pixel values,
- a weed species identification unit receives and stores the image acquired by the camera,
- a processing module comprising a plurality of parallel processing cores performs at least one convolution operation between a sub-matrix constructed from nearby pixels of the image and a predefined kernel of reference pixel images stored in a memory of the unit to obtain a feature representation sub-matrix of the pixel values of the image,
- the processing module computes at least one probability of presence of a weed species among a database of weed species from a feature representation matrix of the image constructed from the feature representation sub-matrices constructed by the parallel processing cores, and generates a weed species detection signal on the basis of said at least one probability of presence, so as to control the spraying action by the vehicle.

Such a system allows to considerably limit the quantity of product such as an herbicide sprayed on the weed, as only the zones of the area where the presence of weed is determined are sprayed.

Although this system operates efficiently, the applicant has explored other ways of identifying plants in an image without relying on repeated sub-matrix convolutions which can be time and/or energy consuming.

In this regard, as an alternative to convolutional neural networks, there has been tentative work for applying "Transformer" deep-learning models, based on self-attention, initially developed for natural language processing (NLP) applications, to computer vision, in particular to image segmentation.

The following papers: "Training data-efficient image transformers & distillation through attention", Hugo Touvron et al., January 2021, "Segmenter: Transformer for Semantic Segmentation", Robin Strudel et al., May 2021, and "An Image is Worth 16x16 Words: Transformers for Image Recognition at scale", Alexey Dosovitskiy et al., conference paper at ICLR 2021, June 2021, disclose the underlying basic principles. A general description of the Transformer model can be found at: https://en.wikipedia.org/wiki/Transformer (machine_learning model)

Transformers, when applied to the field of computer vision, perform a modelization of the global context right from the beginning of the process and preserve this context throughout the network. The inventors have observed that this global context is really useful for plant segmentation in an input image of a field. Therefore, the inventors have found that a specific design of transformers layers could operate usefully in on-the-fly identification and positioning of plant species, especially weed species, in a plant treatment vehicle.

SUMMARY OF THE INVENTION

Thus, the present invention provides a plant treatment system comprising:

- a vehicle,
- at least one camera adapted to be mounted on said vehicle to acquire an image of a portion of an area while said vehicle is travelling on said area, said image comprising a matrix of pixel values,
- at least one plant treatment device adapted to be mounted on said vehicle and comprising a controller module adapted to receive a plant treatment signal and to selectively trigger a plant treatment based on said weed species detection signal,

the plant treatment system further comprising a plant identification unit comprising:

- a communication module adapted to receive the image acquired by the camera and to send a weed species detection signal to said controller module of said plant treatment device,
- a memory module adapted to store said image, and
- a processing module configured to:

  • convert the image into a plurality of vectors respectively associated with a plurality of image patches, each vector being representative of pixel values in the patch and the position of the patch in the image,
  • apply the plurality of vectors to a learnable encoder to generate a plurality of encoded patch vectors,
  • apply the outputs of the encoder to the inputs of a learnable decoder comprising a plurality of layers to generate a plurality of decoded patch vectors, said decoder further receiving class-related inputs to generate decoded plant class-related vectors,

wherein at least one among the learnable encoder and the learnable decoder comprises a transformer-type multi-layer mechanism containing at least one self-attention layer,

- combining said decoded plant class-related vectors and decoded patch vectors to generate a plurality of class masks each defining a probability that a given patch corresponds to a given class,
- deriving from said class masks a probability matrix from which the plant detection signal is generated.

Advantageous but optional features of this system are the following:

- said image to vector conversion comprises a patch value embedding function.
- said image to vector conversion further comprises a convolution function between the matrices representative of the image patches and a learnable weight matrix having the same size as said matrices.
- said image to vector conversion comprises a patch position embedding function.
- both the encoder and the decoder comprise a transformer-type multi-layer mechanism containing at least one self-attention layer.
- one among the encoder and the decoder comprises a convolutional neural network and the other among the encoder and the decoder comprises a transformer-type multi-layer mechanism containing at least one self-attention layer.
- the decoder comprises a linear mapping function combined with a 2D reshaping function.
- the decoder comprises a logit function combined with a 2D reshaping function.
- the linear mapping function comprises an upsampling function to the image pixel level.
- the decoder constitutes a mask transformer, said decoder receiving as inputs said patch encodings ($z_{L,1}$, ... $Z_{L,N}$) as well as a set of K learnable class embeddings (cis = [$cls_1$, ..., $cls_K$]), and being associated with a class mask generator intended to form respective class masks.
- said class embeddings are initialized randomly.
- said class mask generator comprises a scalar product generator between said patch embeddings and said class embeddings (m = Masks ($z_{mask}$, c)).
- the system further comprises a class mask reshaping function to form a class mask matrix having the same size as the patch bidimensional arrangement in the image.
- the system further comprises an upsampling function to form a class mask matrix having the same size as the pixel image.
- said plant class-related inputs are respectively associated with a plurality of plant species, esp. weed species.
- said plant class-related inputs are respectively associated with plants and bare soil.

BRIEF DESCRIPTION OF THE DRAWINGS

Other features, aims and advantages of the invention will readily appear from the following description of several of its embodiments, provided as non-limitative examples, and of the accompanying drawings.

In the drawings:

- Figure 1 is a diagrammatic perspective view of an agricultural vehicle comprising a plant control system according to an embodiment of the invention,
- Figure 2 is a block-diagram illustrating the modules and units of the weed control system of figure 1,
- Figures 3 illustrates the structure of a Raw Bayer color image,
- Figure 4 is a block diagram of an image processing operation according to the present invention, and
- Figure 5 illustrates an image pre-processing that can be used with the present invention.

In the different figures, the same reference signs designate like or similar elements or parts.

DETAILED DESCRIPTION OF A PREFERRED EMBODIMENT

*1) Exemplary embodiment*

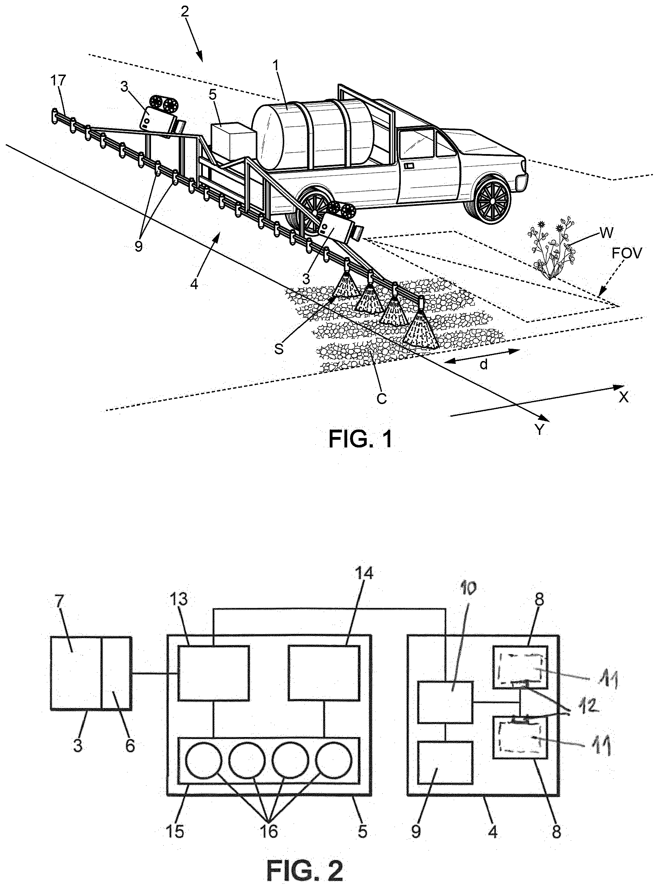

Figure 1 illustrates a possible embodiment of the present invention in the form of an agricultural sprayer 1.

The agricultural sprayer 1 is designed to travel on a crop field. In particular, the agricultural sprayer 1 can be mounted on or dragged by a tractor. The sprayer can be either self-propelled, trailed by a tractor, mounted on a tractor or demountable (fitted to a tool carrier for instance).

A crop field is illustrated on figure 1 and usually presents crops C which may be organized along rows and may be visible or not (pre-emergent crops for instance). A variety of weed plants W may also grow in the field as illustrated on figure 1.

The agricultural sprayer 1 is designed to travel, along a longitudinal direction X on the crop field, usually along one or several rows of crops in the field. The agricultural sprayer 1 comprises at least one boom 17 extending along a transversal direction Y perpendicular to the longitudinal direction X.

The agricultural sprayer 1 is provided with a weed control system 2 according to the invention, which is diagrammatically illustrated in Fig. 2.

More precisely, the weed control system 2 comprises one or several camera(s) 3, a spraying unit 4 and a weed species identification unit 5.

Cameras 3 are mounted on the agricultural sprayer 1, for instance on the boom of the agricultural sprayer, and are adapted to acquire images of a portion of the crop field while the agricultural sprayer 1 is travelling on the field. The camera can be mounted with a given angle relative to a vertical direction perpendicular to the transversal and longitudinal direction, for instance between 45 and 60 degrees, in order to acquire an image of the crop field in front of the agricultural sprayer. The cameras 3 can be mounted on shock absorbers in order to reduce the vibrations during movements of the sprayer 1 and to increase the sharpness of the acquired images. As it will be explained hereafter, several features can be taken into account in the recognition of weed species, including the shape, the texture, the color and/or the location of the weed species in the images. The sharpness of the acquired images is also important to obtain such information, esp. despite the light being low and the sprayer speed being fast. Several criteria may therefore be necessary to recognize a wide variety of weed species, and the present invention allows for this.

Each camera 3 comprises a sensor 6, such as a CCD or CMOS sensor, and an optical system 7 comprising a plurality of lenses and/or mirrors.

Each image comprises W*H pixels where W is the number of pixels along a width of the image and H is a number of pixels along a height of the image. The width W and the height H of the camera define a resolution of the sensor of the camera. The sensor can in particular acquire an image comprising a matrix of at least one million pixel values, more preferably over 5 million pixel values.

Alternatively, a linear camera can be used, and a matrix of pixel values can be reconstructed from the output of the linear camera.

Advantageously, the location of the camera, the resolution of the sensor and the design of the optical system are selected so that each pixel of said matrix independently covers an area of the ground of less than five square millimetres, preferably less than two square millimetres. Such a spatial resolution of the camera is important for making it possible to reliably identify the weed species as detailed further below.

The camera 3 can be a color camera. In the present case, the camera generates a one-channel Raw Bayer image of size $H \times W \times 1$ (which can be preprocessed in a resizing step to obtain a four-channel image of size $H/2 \times W/2 \times 4$ where the color components R, B, G1, G2 are grouped together, as will be explained at a later stage.

More generally, the image matrix can be a 3D matrix of dimensions $W \times H \times C$, where C is the number of channels.

It should be noted here that a Raw Bayer image converted to RGB format in the conventional way could also be used, although it involves loss of information at the resizing step.

In contrast to the previously known weed control systems, the camera 3 may be free of color filters and polarizers other than the color filter layer at the pixel level provided in the image sensor itself. In particular, the optical system 7 of the camera 3 may be constituted only by lenses and/or mirrors.

Alternatively, the camera can be a multispectral camera with channels in the visible area and in the non-visible areas.

A spraying unit 4 is also mounted on the agricultural sprayer 1 and comprises several components that will now be described in greater detail.

As illustrated on figure 2, the spraying unit 4 comprises at least one supply module 8, at least one nozzle 9 and a controller module 10. In particular, the spraying unit 4 may comprise at least two supply modules 8 containing different chemicals.

Each supply module 8 comprises a chemical agent tank 11 and an electronic delivery valve 12.

The chemical agent tank 11 contains a liquid that can be an herbicide or water.

In the present embodiment, the tank can contain a premix of water and herbicide or a separate tank of water can contain water to be mixed with an herbicide on the fly, during or just prior to the delivery. Each supply module 8 can be provided with a tank 11 containing a different liquid. For instance, one supply module 8 can be provided with a tank 11 containing an herbicide containing an active agent adapted for weeding treatment before sprouting of weeds, while another supply module 8 can be provided with a tank 11 containing an herbicide with an active agents adapted for weeding treatment after the sprouting of weeds.

The spraying unit 4 comprises at least one nozzle 9 to spray a chemical agent from at least one of said supply modules 8 on a target zone S of the field.

The nozzles are mounted on the agricultural sprayer, for example spread along the transversal direction of extension of the agricultural sprayer as illustrated on figure 1.

The controller module 10 of the spraying unit 4 receives a weed species detection signal from the weed species identification unit 5 as it will be described further below. Based on this signal, the controller module 10 selectively controls the spraying of chemical agents from at least one of the supply modules 8 through the nozzle 9.

The controller module 10 may control the spraying of chemical agents with a spraying delay after the reception of the weed species detection signal.

The spraying delay may be computed based on a latency time of the weed recognition unit as well as a speed of the vehicle 1 and a calibrated distance between the nozzle 9 and the camera 3.

The spraying delay may also take into account a pre-calibrated time of delivery of the chemical agent corresponding to the latency of the mechanical systems of the spraying unit and the time of displacement of the liquid in the tubes of the spraying unit for instance.

In one embodiment of the invention, the weed species detection signal only comprises information regarding the weed species. The controller module 10 of the spraying unit 4 then selects a supply module 8 containing an adapted herbicide for this weed species and controls the electronic delivery valve 12, and if needed the nozzle 9, to spray the chemical agent.

In other embodiments of the invention, the weed species detection signal may comprise a weed species location indicator.

In such embodiments, a location of the weed species on the field may be determined from said weed species location indicator, for instance by using additional information on the location of the sprayer 1 obtained by using a global positioning system and, optionally, additional calibration information on the orientation and/or position of the camera 3 on the sprayer 1.

The location of the weed species on the field may then be stored in a memory, in particular in the memory module 14.

In an embodiment illustrated on the figures, the spraying unit 4 comprises a plurality of nozzles 9 arranged along the transversal direction Y of the agricultural sprayer. The nozzles 9 are directed toward the field and each nozzle 9 is adapted to spray a chemical product to cover a target zone S of the field.

In this embodiment, the controller module 10 of the spraying unit 4 may then receive the weed species detection signal and control the spraying of chemical agent through the plurality of nozzles 9 based on the weed species location indicator. In particular, only one or a restricted number of nozzles 9 may be opened in accordance with the location of the weed on the ground.

In a variant embodiment, the spraying unit 4 may comprise at least one movable nozzle 9. The movable nozzle may be adapted to selectively spray a plurality of target zones S on the ground, for instance a plurality of target zones S juxtaposed along the transversal direction Y of the agricultural sprayer 1. The movable nozzle 9 may have its position and/or orientation controlled by a tilting or sliding control unit.

In this embodiment, the controller module 10 of the spraying unit 4 receives the weed species detection signal and controls the position and/or the orientation of the movable nozzle 9 based on the weed species location indicator. In particular, the position and/or orientation of the nozzle 9 may be adapted in accordance with the location of the weed on the ground in order to spray herbicide on the targeted location on the ground.

The two embodiments described above can be combined to provide a plurality of movable nozzles independently moved and selected.

Referring to Fig. 2, the weed species identification unit 5 comprises a communication module 13, a memory module 14 and a processing unit 15.

The communication module 13 receives the image acquired by the camera 3 and sends the weed species detection signals to the controller module 10 of the spraying unit 4 of the weed control system 2 as it was already described before.

In particular, the camera 3 may generate a continuous stream of images during the movement of the agricultural sprayer 1 on the crop field, in which case the communication module 13 may continuously receive said images and all the modules of the weed species identification unit 5 may be operating in real-time or soft-real-time, thus also generating and sending a continuous stream of weed species detection signals to the controller module 10 of the spraying unit 4.

The communication module 13 may communicate with the camera 3 and the controller module 10 of the spraying unit 4 by wired communication or using a wireless protocol (e.g., an optical or radio protocol).

The memory module 14 is capable of storing the received image or stream of images. The memory module 14 may comprise several sub-modules and may be distributed in several chips of the weed species identification unit 5. In particular, the memory module 14 may comprise a non-volatile storage memory and a volatile storage memory.

The processing unit 15 comprises a processor which can typically comprise, although not necessarily, a plurality of $p$ parallel processing cores 16.

The processing unit may be part of a single computing component 15, for instance a central processing unit (CPU) or a graphical processing unit (GPU), or belong to more recent hybrid processing architectures.

## 2) Transformer segmentation - generalities

Transformer deep-learning models (cf. for instance https://en.wikipedia.org)/wiki/Transformer_(machine_learning_model) are commonly used Natural Language Processing applications. Such a model is a neural network architecture based on self-attention mechanism capturing long range/global dependencies between items or "tokens" in a sentence.

In Natural Language Processing (NLP), sentences made of words are split into sequences of tokens, each containing information encoding the word itself and its position in the text. Each word is then represented by a numerical vector of V dimension with V is the vocabulary size (predefined for each dataset/application). Then the numerical vector is encoded by a word embedding layer, which reduces the dimension of the numerical vector from V to D (D being the embedding dimension). The function of the embedding is to group tokens with high similarity into clusters in a latent space of dimension D. It also helps reduce the parameters for the model (V being usually significantly larger than D). This process is known by the skilled person as "word2vec".

In addition, to help the model knows about the positions of the tokens in a sequence, there is another embedding for each token, which is applied to the positions of the tokens and which also groups the token positions into a latent space of dimension D. These two embeddings are added up to output the input representation for each token.

Subsequently, the sequence of tokens is passed to self-attention layers of a Transformer encoder. At every layer, three representations Query (Q), Key (K) and Value (V) are generated for each token.

These three representations are inputs for a self-attention layer. The Q and K vectors are used to compute the attention weights (normalized with softmax). These weights are then multiplied with the V vectors and added up to output a context vector.

To refine the model capacity, multiple attention heads are used to focus on different parts of the sentence.

This model can be seen as multiple separate attention heads whose results are concatenated into one single vector.

More details about the operation of the Transformer model in natural language processing applications can be found at:

https://lena-voita.github.io/nlp_course/seq2seq_and_attention.html which provides the skilled person with the necessary details for implementing such a model in a digital processing environment.

**3) Implementation of a transformer-based model in the system of Figs. 1 and 2**

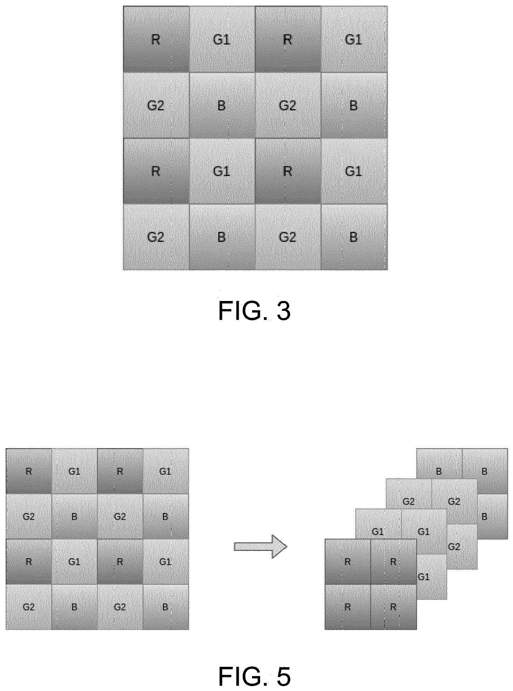

In a system as shown in Figs. 1 and 2 and described above, each camera 3 acquires at a given time an image comprising a matrix of pixel values. In the present case, each image is generated in the Raw Bayer format, with the color arrangement of pixels as illustrated in Fig. 3. The image is stored in a working memory.

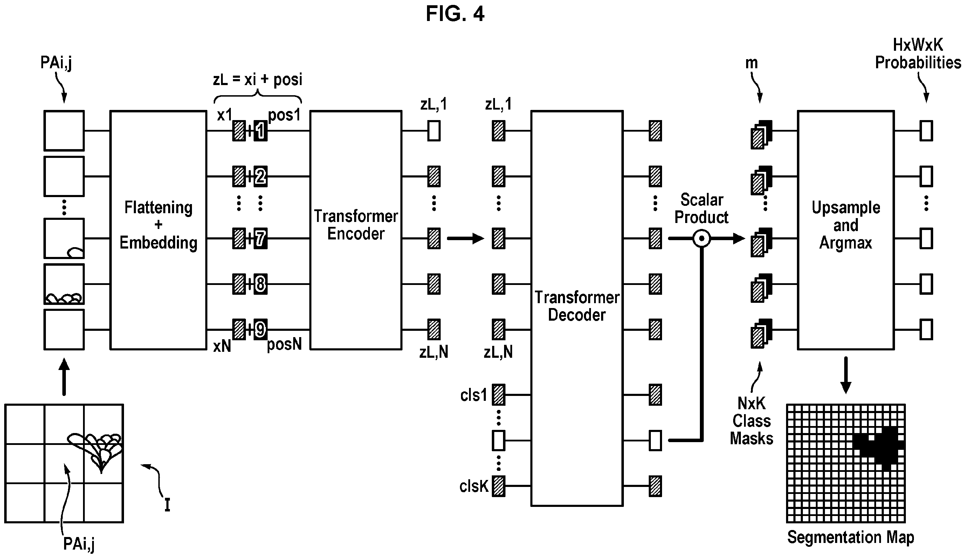

The different steps of the image processing according to an example of the present invention will now be described with reference to Fig. 4.

*a) Generation of patch vectors*

Referring to Fig. 4, the image I is subdivided by an image processor into a plurality of patches PAi,j of size $P \times P$, typically $8 \times 8$ pixel patches or more preferably $16 \times 16$ pixel patches, and contains for each pixel a four channel values coded with an appropriate word size, typically a byte for each channel.

For each patch, the processor builds a one-dimension vector of a length determined by the number of pixels in the patch and the number of channels, the size of the vector thus being $P \times P \times C$. In the present example where C = 4 and each channel is encoded on a byte, the vector size is 256 bytes for a $8 \times 8$ pixel patch, and 1024 bytes for a $16 \times 16$ pixel patch.

Thus an image of $W \times H$ pixels is converted into a set of N one-dimension vectors numerically denoted [x1, ...xN], where

$$N = W \times H / (P \times P).$$

*b) Vector embedding*

These vectors [x1, ...xN] representing the whole image I are linearly projected by a patch embedding layer to a latent space of dimension D in order to reduce the number of dimensions, in a manner known per se. More particularly, a matrix multiplication is performed between a bidimensional matrix of size (D, (P × P × C)) containing learnable weights and each vector xi.

Advantageously, this embedding step can be merged with the step of generation of the vectors xi by performing a convolution between a set of D learnable weight kernels of size $P \times P \times C$ with each patch matrix having the same size. The result is an array of N vectors of dimension D, however organized in a two-dimensional array.

At the output of this layer, the input image I is represented by a set of patch embedding vectors x0 = [Ex1 , ..., ExN] of dimensions N × D.

Along with this patch embedding, an embedding of the position vectors associated with the respective patches, containing e.g. the x,y coordinates of the patch centers, is performed in order to reduce the number of dimensions to D. To this end, a D size vector for each patch is initialized, e.g. with random values, and the learning process will generate the patch position vectors in the reduced space of dimension D : pos0 = [pos1 , ..., posN] of dimensions N × D.

The above processes lead to an input sequence of tokens noted z0 = x0 + pos0, containing N tokens representative of the respective patches PAi,j and their positions in image I.

*c) Transformers architecture*

Referring to Fig. 4, the transformers architecture comprises two main modules, i.e., an encoder and a decoder. Each module consists of multiple transformer blocks stacked on top of each other. Depend on the module, a block can be composed of one multi-headed self-attention network (MSA) (in the encoder module) or one MSA and one decoder-encoder MSA (in the decoder module) followed by a point-wise multi-layer perception (MLP) feed forward block. A layer normalization is applied before every block and residual connections are added after every block.

More details about this known structure are provided in the above-mentioned article: "Segmenter: Transformer for Semantic Segmentation".

*c1) Transformers encoding*

These tokens are collectively applied to a transformer encoder having L layers to generate a contextualized encoding sequence zL = [$zL_1$, ..., $zL_N$].

A Transformer encoder layer consists in a multi-headed self-attention block MSA followed by a point-wise MLP block having two layers, with a layer normalisation applied in between.

The self-attention block per se is here composed of a set of three point-wise linear layers which map the input tokens intermediate representations, respectively queries Q, keys K and values V, as described in detail in the cited literature.

Thus the transformer encoder maps the input sequence $z0 = [z0,1 , ..., z0, N ]$ of embedded patches having with position encoding to an output $zL = [zL,1 , ..., zL,N ]$ forming a contextualized encoding sequence containing rich "semantic" information to be used by the decoder.

*d) transformers decoding*

The sequence of patch encodings zL of dimensions $N \times D$ is decoded by a decoder having M layers into a segmentation map s of dimensions $H \times W \times K$ where K is the number of classes. Classes are representative of different potential elements of the image, typically different plant species (more typically weed species, cf. infra) and soil.

Two mapping approaches can be used.

In a first approach, a linear mapping is performed. For instance, a logistic regression (logit) function is applied to the encoded patch-level sequence zL to generate N patch-level class logits $z_{lin}$ having K dimensions; this logit sequence, which can be generated by matrix multiplication with a learnable class matrix of size KxD is then reshaped into a 2D patch-level segmentation map comprising a matrix with a height H/P, a width W/P and a number K of layers; this matrix is then upsampled e.g. by a bilinear interpolation to a matrix having the original image size HxW and the same K layers each representing the probability that an image pixel belongs to a given class.

In a second approach, as illustrated in Fig. 4, a mask Transformer is used. A set of K learnable class embeddings:

$$cls = [cls_1, ..., cls_K]$$

of dimension D is initialized e.g. randomly for each class; each class embedding is intended to form a class mask; to this end, the class embeddings $cls_i$ are jointly processed with the N patch encodings $z_{L,1}, ... Z_{L,N}$ by a decoder. The decoder comprises a transformer decoder with M layers of a self-attention mechanism and generates decoded patch outputs together with decoded class outputs.

From these outputs, K class masks for each patch are generated by computing the scalar product (dot product) between each of the N patch embeddings, and each of the K class embeddings, so as to generate a set of $N \times K$ class masks:

$$m = Masks (z_{mask}, c)$$

Each class mask for a given patch contains the probability that the patch content corresponds to the class in question.

These class masks are then reshaped to form K bidimensional mask matrices of size $H/P \times W/P$, and linearly upsampled do generate a global segmentation map with K layers of size WxH, where each layer provides the probability that a given pixel of the image belongs to the corresponding class.

The process is repeated for each input image, so as to dynamically construct the corresponding global segmentation map, from which the sprayer is controlled as will be specified *infra.*

**4) Specificities of plant detection, esp. weed detection**

*a) Image pre-processing*

In order to simplify the transformers-model processing as explained above, an image pre-processing can be used where a RWB image of size HxWx1 is converted into an image of size $H/2 \times W/2 \times 4$ by grouping the R, B, G1 and G2 colors into respective channels, as illustrated in Fig. 5.

This pre-processing reduces the input image resolution by a factor 2 along each dimension, without however any loss of information as each color pixel value is retained in the respective channel.

Such approach allows reducing the necessary parameters of the first layer in the model, and thus speeding up the whole process. In addition, improvements of the reduced image matrix thus obtained can be applied such as flipping, random cutting, random rotation, contrast adjustment, brightness adjustment. This allows making the model better suited to different kinds of images, in particular image types that the model has never processed.

*b) Classes*

The various steps as described above lead to a segmented representation (probability map) of original image I, i.e. an output matrix containing probabilities of for each weed species in the database of weed species attached to the respective classes.

In a possible embodiment of the invention, the output matrix may be post-processed so as to generate values indicative of the locations of weed species in the image acquired by the camera, and to convert these values to positions of the weeds in the area under treatment.

This allows to select and/or move the nozzle to minimize the chemical consumption.

The value indicative of a location of a weed species may for instance be the coordinates of a bounding box.

From the output matrix, the processing module 15 is thus capable of computing at least one probability of presence of a weed species among the database of weed species.

The processing module 15 may thus generate a weed species detection signal on the basis of said probability of presence.

Using the Transformers model as described above, it is possible to obtain a plant identification system, esp. a weed identification system with a low latency.

More precisely, the weed species identification unit 5 may be adapted to generate a weed species detection signal from an image I acquired by the camera 3 with a latency time $t_l$.

For more details about the operability of the system taking into account the latency time and the related system parameters, reference should be made to the description of WO2018142371A1.

## 5) Training and calibration

The system comprises a database of weed species. The database of weed species may comprise for instance Cirsium arvense Scop, Chenopodium polyspermum L., Bromus sterilis L., Papaver rhoeas L., Datura stramonium L, Avena fatua L., Galium aparine L., Geranium dissectum L., Sonchus oleraceus L., Convolvulus arvensis L., Matricaria sp., Polygonum convolvulus L., Veronica hederaefolia L., Alopecurus agrestis L.

A set of labelled images each containing one or several of these species is used for training the Transformer model in order to construct the encoder and decoder matrices as well as the class embeddings cls = $[cls_1, ..., cls_K]$ corresponding to the respective species.

These labelled images can be pre-existing or captured with the system operating in a training mode, or possibly with a simplified vehicle 1 with only one camera at the prescribed height and orientation and without the spraying or other plant treating system.

The labelling can comprise assigning a category of weed for each sample acquired in a given image and can also comprise defining a bounding box or an indication of the location, inside an image, of each weed species shown in said image.

For each category of weed, the system thus can use a plurality of samples illustrating said category of weed.

Since the transformers model takes into account all image features, the system learning phase can take into account different kinds of plant features such as shape, texture, color(s).

The learning phase can be performed with any suitable number or diversity of labelled images in the training dataset, the deeper the learning the more accurate the image segmentation will be.

Finally, in a final step, the matrices as defined by the training are stored in the memory module 14 of the control system 2 and can then be used for image segmentation and plant treatment operation as detailed above.

As will be well understood by those skilled in the art, the several and various steps and processes discussed herein to describe the invention may be referring to operations performed by a computer, a processor or other electronic calculating device that manipulate and/or transform data using electrical phenomenon. Those computers and electronic devices may employ various volatile and/or non-volatile memories including non-transitory computer-readable medium with an executable program stored thereon including various code or executable instructions for execution by the computer or processor, where the memory and/or computer-readable medium may include all forms and types of memory and other computer-readable media.

The skilled person will readily recognize from the above description and from the accompanying drawings that various changes, modifications and variations can be made without departing from the scope as defined by the appended claims.

In particular, according to an embodiment not claimed by the invention, one among the transformer-based encoder and transformer-based decoder as described above can be replaced or supplemented with a convolutional neural network so as to obtain a hybrid architecture where the advantages of determining long-distance relationships between image items (thanks to the transformer) and having an efficient segmentation (thanks to the CNN) are combined.

Notably, although the above embodiment relates to selective spraying of weed, the present invention applies to different types of plant treatment such as mechanical removal, thermal treatment, destructive spraying, growth-promoting or disease treatment spraying.

In this regard, the plants can typically be weed species or crops.

## Claims

1. A plant treatment system (2) comprising:

   - a vehicle (1),
   - at least one camera (3) adapted to be mounted on said vehicle to acquire an image of a portion of an area while said vehicle is travelling on said area, said image comprising a matrix of pixel values,
   - at least one plant treatment device (4) adapted to be mounted on said vehicle and comprising a controller module adapted to receive a plant treatment signal and to selectively trigger a plant treatment based on said weed species detection signal,

the plant treatment system further comprising a plant identification unit (5) comprising:

- a communication module (13) adapted to receive the image acquired by the camera and to send a weed species detection signal to said controller module (10) of said plant treatment device,
- a memory module (14) adapted to store said image, and
- a processing module (15) configured to:

• convert the image into a plurality of vectors respectively associated with a plurality of image patches, each vector being representative of pixel values in the patch and the position of the patch in the image,
• apply the plurality of vectors to a learnable encoder to generate a plurality of encoded patch vectors,
• apply the outputs of the encoder to the inputs of a learnable decoder comprising a plurality of layers to generate a plurality of decoded patch vectors, said decoder further receiving class-related inputs to generate decoded plant class-related vectors, wherein at least one among the learnable encoder and the learnable decoder comprises a transformer-type multi-layer mechanism containing at least one self-attention layer,

- combining said decoded plant class-related vectors and decoded patch vectors to generate a plurality of class masks each defining a probability that a given patch corresponds to a given class,
- deriving from said class masks a probability matrix from which the plant detection signal is generated.

2. A system according to claim 1, wherein said image to vector conversion comprises a patch value embedding function.

3. A system according to claim 1, wherein said image to vector conversion further comprises a convolution function between the matrices representative of the image patches and a learnable weight matrix having the same size as said matrices.

4. A system according to any one of claims 1 to 3, wherein said image to vector conversion comprises a patch position embedding function.

5. A system according to any one of claims 1 to 4, wherein both the encoder and the decoder comprise a transformer-type multi-layer mechanism containing at least one self-attention layer.

6. A system according to any one of claims 1 to 4, wherein one among the encoder and the decoder comprises a convolutional neural network and the other among the encoder and the decoder comprises a transformer-type multi-layer mechanism containing at least one self-attention layer.

7. A system according to any one of claims 1 to 6, wherein the decoder comprises a linear mapping function combined with a 2D reshaping function.

8. A system according to any one of claims 1 to 6, wherein the decoder comprises a logit function combined with a 2D reshaping function.

9. A system according to claim 6 or 7, wherein the linear mapping function comprises an upsampling function to the image pixel level.

10. A system according to any one of claims 1 to 9, wherein the decoder constitutes a mask transformer, said decoder receiving as inputs said patch encodings ($z_{L,1}, ... z_{L,N}$) as well as a set of K learnable class embeddings (cls = [$cls_1$, ..., $cls_K$]), and being associated with a class mask generator intended to form respective class masks.

11. A system according to claim 8, wherein said class embeddings are initialized randomly.

12. A system according to claim 10 or 11, wherein said class mask generator comprises a scalar product generator between said patch embeddings and said class embeddings (m = Masks ($z_{mask}$, c)).

13. A system according to anyone of claims 10 to 12, further comprising a class mask reshaping function to form a class mask matrix having the same size as the patch bidimensional arrangement in the image.

14. A system according to claim 13, further comprising an upsampling function to form a class mask matrix having the same size as the pixel image.

15. A system according to any one of claims 1 to 12, wherein said plant class-related inputs are respectively associated with a plurality of plant species, esp. weed species, or with plants and bare soil.

**Patentansprüche**

1. Pflanzenbehandlungssystem (2) mit:

- einem Fahrzeug (1)
- zumindest einer Kamera (3),

die geeignet ist, auf dem Fahrzeug montiert zu werden, um ein Bild eines Teils eines Bereiches aufzunehmen, während das Fahrzeug den Bereich befährt, wobei das Bild eine Matrix von Pixelwerten aufweist,
- zumindest einem Pflanzenbehandlungsgerät (4),

das geeignet ist, auf dem Fahrzeug montiert zu werden,
und ein Steuerungsmodul aufweist, dass geeignet ist, ein Pflanzenbehandlungssignal zu empfangen und selektiv eine Pflanzenbehandlung basierend auf dem Unkrautart-Detektionssignal auszulösen,
wobei das Pflanzenbehandlungssystem weiterhin eine Pflanzenidentifikationseinheit aufweist mit:

- einem Kommunikationsmodul (13), das geeignet ist, das von der Kamera aufgenommene Bild zu empfangen und ein Unkrautart-Detektionssignal an das Steuerungsmodul (10) des Pflanzenbehandlungsgerätes zu senden,
- einem Speichermodul (14), das geeignet ist, das Bild zu speichern, und
- einem Verarbeitungsmodul (15), das ausgebildet ist:

• das Bild in eine Vielzahl von Vektoren, die jeweils einer Vielzahl von Bildstellen zugeordnet sind, zu konvertieren, wobei jeder Vektor repräsentativ für Pixelwerte an der Stelle und die Position der Stelle in dem Bild ist,
• die Vielzahl von Vektoren auf einen lernfähigen Codierer zu applizieren, um eine Vielzahl von codierten Stellenvektoren zu generieren,
• die Ergebnisse des Codierers auf die Eingänge eines lernfähigen Decodierers zu applizieren, der eine Vielzahl von Schichten aufweist, um eine Vielzahl von decodierten Stellenvektoren zu generieren, wobei der Decodierer weiterhin klassenbezogene Eingänge empfängt, um pflanzenklassenbezogene Vektoren zu generieren, wobei der lernfähige Codierer und/oder der lernfähige Decodierer einen transformatorartigen vielschichtigen Mechanismus aufweist, der zumindest eine Selbst-Aufmerksamkeits-Schicht beinhaltet,

- mit einem Kombinieren der decodierten pflanzenklassenbezogenen Vektoren und decodierten Stellenvektoren, um eine Vielzahl von Klassenmasken zu generieren, die jeweils eine Wahrscheinlichkeit definieren, dass eine bestimmte Stelle mit einer bestimmten Klasse korrespondiert,
- mit einem Ableiten einer Wahrscheinlichkeitsmatrix aus den Klassenmasken, aus welcher das Pflanzendetektionssignal generiert wird.

2. System nach Anspruch 1, wobei die Bild-zu-Vektor-Umwandlung eine Stellenwert-Einbettungsfunktion aufweist.

3. System nach Anspruch 1, wobei die Bild-zu-Vektor-Umwandlung weiterhin eine Faltungsfunktion zwischen den für die Bildstellen repräsentativen Matrizen und einer lernfähigen Gewichtsmatrix, die die gleiche Größe wie die Matrizen hat, aufweist.

4. System nach einem der Ansprüche 1 bis 3, wobei die Bild-zu-Vektor-Umwandlung eine Stellenpositions-Einbettungsfunktion aufweist.

5. System nach einem der Ansprüche 1 bis 4, wobei sowohl der Codierer als auch der Decodierer einen transformatorartigen vielschichtigen Mechanismus aufweist, der zumindest eine Selbst-Aufmerksamkeits-Schicht beinhaltet.

6. System nach einem der Ansprüche 1 bis 4, wobei der Codierer oder der Decodierer ein konvolutionelles neuronales Netzwerk aufweist und der andere von dem Codierer und dem Decodierer einen transformatorartigen vielschichtigen Mechanismus aufweist, der zumindest eine Selbst-Aufmerksamkeits-Schicht beinhaltet.

7. System nach einem der Ansprüche 1 bis 6, wobei der Decodierer eine mit einer 2D-Rückformungsfunktion oder 2D-Umformungsfunktion kombinierte lineare Kartierungsfunktion aufweist.

8. System nach einem der Ansprüche 1 bis 6, wobei der Decodierer eine mit einer 2D-Rückformungsfunktion oder 2D-Umformungsfunktion kombinierte Logit-Funktion aufweist.

9. System nach Anspruch 6 oder 7, wobei die lineare Kartierungsfunktion eine Überabtastungsfunktion für die Bildpixelebene oder das Bildpixelniveau aufweist.

**10.** System nach einem der Ansprüche 1 bis 9, wobei der Decodierer einen Maskentransformator darstellt, wobei der Decodierer als Eingänge die Stellencodierungen ($z_{L,1}...Z_{L,N}$) sowie einen Satz von K erlernbaren Klasseneinbettungen (cis = [$cls_1$,..., $cls_K$]) empfängt, und einem Klassenmaskengenerator zugeordnet ist, der zum Formen entsprechender Klassenmasken bestimmt ist.

**11.** System nach Anspruch 8, wobei die Klasseneinbettungen zufällig initialisiert sind.

**12.** System nach Anspruch 10 oder 11, wobei der Klassenmaskengenerator einen Skalarprodukt-Generator zwischen den Stelleneinbettungen und den Klasseneinbettungen (m = Masks ($z_{mask}$, c)) aufweist.

**13.** System nach einem der Ansprüche 10 bis 12, weiterhin mit einer Klassenmasken-Rückformungsfunktion oder -Umformungsfunktion, um eine Klassenmaskenmatrix zu formen, die die gleiche Größe wie die bidimensionale Anordnung der Stellen in dem Bild hat.

**14.** System nach Anspruch 13, weiterhin mit einer Überabtastungsfunktion, um eine Klassenmaskenmatrix zu formen, die die gleiche Größe wie das Pixelbild aufweist.

**15.** System nach einem der Ansprüche 1 bis 12, wobei die pflanzenklassenbezogenen Eingänge jeweils einer Vielzahl von Pflanzenarten, insbes. Unkrautarten, oder Pflanzen und bloßer Erde zugeordnet sind.

## Revendications

**1.** Système de traitement de plantes (2) comprenant :

- un véhicule (1),
- au moins une caméra (3) adaptée pour être montée sur ledit véhicule afin d'acquérir une image d'une partie d'une zone pendant que ledit véhicule se déplace sur ladite zone, ladite image comprenant une matrice de valeurs de pixels,
- au moins un dispositif de traitement de plantes (4) adapté pour être monté sur ledit véhicule et comprenant un module de commande adapté pour recevoir un signal de traitement de plantes et pour déclencher sélectivement un traitement de plantes sur la base dudit signal de détection d'espèces de mauvaises herbes,

le système de traitement de plantes comprenant en outre une unité d'identification de plantes (5) comprenant :

- un module de communication (13) adapté pour recevoir l'image acquise par la caméra et pour envoyer un signal de détection d'espèces de mauvaises herbes audit module de commande (10) dudit dispositif de traitement de plantes,
- un module de mémoire (14) adapté pour stocker ladite image, et
- un module de traitement (15) configuré pour :

• convertir l'image en une pluralité de vecteurs respectivement associés à une pluralité de parcelles d'image, chaque vecteur représentant des valeurs de pixels de la parcelle et la position de la parcelle dans l'image,
• appliquer la pluralité de vecteurs à un codeur apprenable pour générer une pluralité de vecteurs de parcelles codés,
• appliquer les sorties du codeur aux entrées d'un décodeur apprenable comprenant une pluralité de couches pour générer une pluralité de vecteurs de parcelles décodés, ledit décodeur recevant en outre des entrées liées à la classe pour générer des vecteurs liés à la classe décodés de plante, dans lequel au moins un parmi le codeur apprenable et le décodeur apprenable comprend un mécanisme multicouche de type transformateur contenant au moins une couche d'auto-attention,

- combiner lesdits vecteurs liés à la classe décodés de plante et vecteurs de parcelles décodés pour générer une pluralité de masques de classe définissant chacun une probabilité qu'une parcelle donnée corresponde à une classe donnée,
- dériver desdits masques de classe une matrice de probabilité à partir de laquelle le signal de détection de plante est généré.

**2.** Système selon la revendication 1, dans lequel ladite conversion d'image en vecteur comprend une fonction d'intégration de valeur de parcelle.

**3.** Système selon la revendication 1, dans lequel ladite conversion d'image en vecteur comprend en outre une fonction de convolution entre les matrices représentatives des parcelles d'image et une matrice de poids apprenable ayant la même taille que lesdites matrices.

**4.** Système selon l'une des revendications 1 à 3, dans lequel ladite conversion d'image en vecteur comprend une fonction d'intégration de position de parcelle.

**5.** Système selon l'une des revendications 1 à 4, dans lequel le codeur et le décodeur comprennent tous deux un mécanisme multicouche de type transformateur contenant au moins une couche d'auto-attention.

6. Système selon l'une des revendications 1 à 4, dans lequel un parmi le codeur et le décodeur comprend un réseau neuronal convolutif et l'autre parmi le codeur et le décodeur comprend un mécanisme multicouche de type transformateur contenant au moins une couche d'auto-attention.

7. Système selon l'une des revendications 1 à 6, dans lequel le décodeur comprend une fonction de mappage linéaire combinée à une fonction de remodelage 2D.

8. Système selon l'une des revendications 1 à 6, dans lequel le décodeur comprend une fonction logit combinée à une fonction de remodelage 2D.

9. Système selon la revendication 6 ou 7, dans lequel la fonction linéaire comprend une fonction de suréchantillonnage sur le pixel d'image.

10. Système selon l'une des revendications 1 à 9, dans lequel le décodeur constitue un transformateur de masque, ledit décodeur recevant comme entrées lesdits codages de parcelle ($Z_{L,1}$, ... $Z_{L,N}$) ainsi qu'un ensemble de K intégrations de classe apprenables ($cls = [cl_{S1},... cl_{SK}]$), et étant associé à un générateur de masque de classe destiné à former des masques de classe respectifs.

11. Système selon la revendication 8, dans lequel lesdites intégrations de classe sont initialisées de manière aléatoire.

12. Système selon la revendication 10 ou 11, dans lequel ledit générateur de masque de classe comprend un générateur de produit scalaire entre lesdites intégrations de parcelle et lesdites intégrations de classe ($m = Masks (z_{mask}, c)$).

13. Système selon l'une des revendications 10 à 12, comprenant en outre une fonction de remodelage de masque de classe pour former une matrice de masque de classe ayant la même taille que l'agencement bidimensionnel de parcelle dans l'image.

14. Système selon la revendication 13, comprenant en outre une fonction de suréchantillonnage pour former une matrice de masque de classe ayant la même taille que l'image de pixel.

15. Système selon l'une des revendications 1 à 12, dans lequel lesdites entrées liées à la classe de plante sont respectivement associées à une pluralité d'espèces de plantes, en particulier des espèces de mauvaises herbes, ou à des plantes et à un sol nu.

**FIG. 1**

**FIG. 2**

FIG. 3

FIG. 5

FIG. 4

PAi,j

$z_L = x_i + pos_i$

x1      pos1
x1 + 1

2

7

8

xN + 9    posN

Flattening + Embedding

Transformer Encoder

zL,1

zL,N

zL,1

zL,N

Transformer Decoder

cls1

clsK

Scalar Product

m

NxK Class Masks

Upsample and Argmax

HxWxK Probabilities

Segmentation Map

PAi,j

I

EP 4 165 987 B1

15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018142371 A1
- WO 2018141995 A1

**Non-patent literature cited in the description**

- **HUGO TOUVRON et al.** *Training data-efficient image transformers & distillation through attention,* January 2021
- **ROBIN STRUDEL et al.** *Segmenter: Transformer for Semantic Segmentation,* May 2021
- **ALEXEY DOSOVITSKIYET.** An Image is Worth 16x16 Words: Transformers for Image Recognition at scale. *conference paper at ICLR 2021,* June 2021